(19) Europäisches Patentamt
European Patent Office
Office européen des brevets

(11) EP 2 738 014 B1

(12) **EUROPEAN PATENT SPECIFICATION**

(45) Date of publication and mention of the grant of the patent:
**15.07.2015 Bulletin 2015/29**

(51) Int Cl.:
***B60C 1/00*** *(2006.01)* ***C08L 7/00*** *(2006.01)*
***C08L 9/00*** *(2006.01)* *C08L 9/06* *(2006.01)*

(21) Application number: **13192902.8**

(22) Date of filing: **14.11.2013**

(54) **PNEUMATIC TIRE**

LUFTREIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2012 JP 2012260126**

(43) Date of publication of application:
**04.06.2014 Bulletin 2014/23**

(73) Proprietor: **SUMITOMO RUBBER INDUSTRIES, LTD.**
**Kobe-shi, Hyogo-ken, 651-0072 (JP)**

(72) Inventor: **Miyazaki, Tatsuya**
**Kobe-shi, Hyogo 651-0072 (JP)**

(74) Representative: **Manitz, Finsterwald & Partner GbR**
**Martin-Greif-Strasse 1**
**80336 München (DE)**

(56) References cited:
**EP-A1- 2 165 855**
**EP-A2- 1 221 385**
**WO-A1-03/002648**
**DE-A1-102009 033 611**
**US-A- 5 955 531**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 738 014 B1

## Description

The present invention relates to a pneumatic tire.

## BACKGROUND ART

A pneumatic tire includes a tread, a wing, a sidewall, and other various components. Conventionally, formulations of rubber compositions for various components are designed by individually testing each rubber composition for each component in a laboratory so as to design a favorable rubber composition for each individual component (see Patent Literatures 1 to 3). Generally, components are formed from their respective favorable rubber compositions based on the results of the design evaluation, and then assembled with one another to produce a pneumatic tire.

However, even in a pneumatic tire formed from a rubber composition for a tread and other rubber compositions each of which individually exhibits excellent performance such as excellent abrasion resistance in a laboratory test, the finished bonding surface between the tread and its adjacent wing or sidewall after vulcanization is sometimes in poor condition (curling, peel-off, or falling of a thin film of the wing or sidewall, etc.). Specifically, a thin film phenomenon, in which the wing or sidewall stretches thinly over the tread, sometimes occurs to form a thin film in the ground contact area of the tread during crosslinking. Unfortunately, this results in problems such as extremely reduced initial grip performance on a road test and peel-off of the thin film in scales.

In tests such as wet grip grading in accordance with the JATMA standards, results from initial running tests performed after a short running-in period are evaluated. Thus, poor initial grip performance means a great reduction of the product's value. For this reason, there is a demand for a pneumatic tire having a good finished bonding surface between the tread and the wing or sidewall while maintaining required performance of the tread, wing, sidewall, and other various components.

## CITATION LIST

### PATENT LITERATURE

Patent Literature 1: JP-B 4308289
Patent Literature 2: JP-A 2008-24913
Patent Literature 3: JP-B 4246245

## SUMMARY OF INVENTION

### TECHNICAL PROBLEM

The present invention aims to solve the above problems and provide a pneumatic tire having an excellent finished bonding surface between the tread and its adjacent wing or sidewall while maintaining required performance of a tire such as abrasion resistance and resistance to degradation over time.

### SOLUTION TO PROBLEM

The present inventor intensively investigated the above problems, and in consequence reached the following hypothesis: sulfur migrates between tire components during vulcanization, and the migration of sulfur causes a delay in initial crosslinking, resulting in poor adhesion strength between the tread and its adjacent wing or sidewall of a produced pneumatic tire as well as poor condition of the finished bonding surface between the tread and its adjacent wing or sidewall.

The present inventor particularly focused on the migration of sulfur from the wing or sidewall to the tread, and found that when the net sulfur content derived from crosslinking agents in a rubber composition for a tread and the net sulfur content in a rubber composition for a wing or sidewall adjacent to the tread are each set within a specific range and are further adjusted to satisfy a specific relationship, the resulting pneumatic tire has good adhesion strength and a good finished bonding surface between the tread and its adjacent wing or sidewall while maintaining required performance of each component. The present invention has been made based on such findings.

The present invention relates to a pneumatic tire, including a tread and a wing or sidewall adjacent to the tread, wherein the tread is formed from a rubber composition for a tread which has a net sulfur content derived from crosslinking agents of 0.56 to 1.15 parts by mass per 100 parts by mass of a rubber component of the rubber composition for a tread; the wing or sidewall is formed from a rubber composition for a wing or sidewall which has a net sulfur content derived

from crosslinking agents of 1.3 to 2.5 parts by mass per 100 parts by mass of a rubber component of the rubber composition for a wing or sidewall; and the following relationship is satisfied between the net sulfur content derived from crosslinking agents in the rubber composition for a tread and the net sulfur content derived from crosslinking agents in the rubber composition for a wing or sidewall:

(the net sulfur content derived from crosslinking agents in the rubber composition for a wing or sidewall)/(the net sulfur content derived from crosslinking agents in the rubber composition for a tread) $\leq$ 2.5.

The following relationship in terms of initial curing rate t10 is preferably satisfied:

0.4 $\leq$ (t10 of the rubber composition for a wing or sidewall) /(t10 of the rubber composition for a tread) $\leq$ 2.5.

ADVANTAGEOUS EFFECTS OF INVENTION

The present invention provides a pneumatic tire including a tread and a wing or sidewall adjacent to the tread, wherein the net sulfur contents derived from crosslinking agents of the tread and the wing or sidewall satisfy specific conditions. Accordingly, the pneumatic tire has an excellent finished bonding surface between the tread and its adjacent wing or sidewall while maintaining required performance of a tire, such as abrasion resistance and resistance to degradation over time.

BRIEF DESCRIPTION OF DRAWINGS

Fig. 1 shows exemplary cross-sectional schematic diagrams of the shoulder portion and its vicinity of a vulcanized tire for passenger vehicles which has a TOS structure.
Fig. 2 shows exemplary cross-sectional schematic diagrams of the shoulder portion and its vicinity of a vulcanized tire for heavy load vehicles, light trucks, large SUVs, and large passenger vehicles, which has a SOT structure.
Fig. 3 shows exemplary cross-sectional schematic diagrams of the bonding portion between a tread and its adjacent wing or sidewall after vulcanization.
Fig. 4 shows an exemplary cross-sectional schematic diagram illustrating the phenomenon of migration of pure sulfur; and an exemplary distribution graph showing the net sulfur content in cross-section (1) and cross-section (2) of the wing after vulcanization.

DESCRIPTION OF EMBODIMENTS

The pneumatic tire of the present invention includes a tread and a wing or sidewall adjacent to the tread, wherein the tread is formed from a rubber composition for a tread which has a specific net sulfur content derived from crosslinking agents; the wing or sidewall is formed from a rubber composition for a wing or sidewall which has a specific net sulfur content derived from crosslinking agents; and the ratio of the net sulfur content derived from crosslinking agents in the rubber composition for a tread and the net sulfur content derived from crosslinking agents in the rubber composition for a wing or sidewall satisfies a specific relationship.
As used herein, the amounts of chemicals (e.g. a crosslinking agent) incorporated in the rubber composition for a tread, wing, or sidewall each refer to the amount (the added amount) in the rubber composition before crosslinking. In other words, the amounts of chemicals contained in the rubber composition for a tread, wing, or sidewall refer to the theoretical amounts of chemicals contained in the unvulcanized rubber composition for a tread, wing, or sidewall. As used herein, the theoretical amount refers to the amount of a chemical introduced in the preparation of an unvulcanized rubber composition.
Generally used pneumatic tires for passenger vehicles have the structure shown in Fig. 1, i.e. a tread-over-sidewall (TOS) structure in which a raw tread assembly includes wings. In this structure, the tread and the wing are adjacent to each other. Thus, after vulcanization of an unvulcanized tire having this structure, the upper edge of the wing is preferably located, as shown in Fig. 1(c), within a range of about $\pm$ 10 mm from a tread shoulder edge (reference) shown in Fig. 1(d). However, the following phenomena occur in some cases after vulcanization: a thin film phenomenon (over the -10 mm position) in which the ground contact portion of the tread is largely covered with the wing as shown in Fig. 1(b); and a phenomenon (under the +10 mm position) in which the finished wing edge has a round shape due to shrinkage or folding as shown in Fig. 1(a). The thin film phenomenon leads to problems such as reduced initial grip performance, and poor condition and increased variation of the finished wing edge, as well as peel-off in the tread ground contact portion shown in Fig. 3(b) as described above. Moreover, a poor flow of the rubber composition forming the wing

edge leads to problems such as edge irregularities of the wing shown in Fig. 3 (a), poor condition of the finished wing edge (cracking at the wing edge) due to the finished wing edge having a round shape due to shrinkage or folding (as a rough indication, $\theta > 45°$), difference in hue, and difference in ozone cracking resistance. In contrast, the present invention remedies these problems by setting specific amounts of pure sulfur derived from crosslinking agents in the tread and wing, and further adjusting the amounts to satisfy a specific relationship.

On the other hand, pneumatic tires for heavy load vehicles such as trucks and busses, pneumatic tires for light trucks, pneumatic tires for large SUVs, pneumatic tires for large passenger vehicles, and the like generally have the structure shown in Fig. 2, i.e. a sidewall-over-tread (SOT) structure in which a tread is placed and sidewalls are then rolled down by a stitcher or bladder to cover the tread edges. In this structure, the tread and the sidewall are adjacent to each other. Thus, after vulcanization, the upper edge of the sidewall is preferably located, as shown in Fig. 2(c), within a range of about $\pm$ 10 mm from a tread shoulder edge (reference) shown in Fig. 2(d). However, as is the case with the pneumatic tires for passenger vehicles, there are phenomena in which the tread is covered with the sidewall shown in Fig. 2 (b), and in which the sidewall fails to roll up properly and the finished sidewall edge has a round shape due to shrinkage or folding as shown in Fig. 2(a). The same problems described above occur in these cases. However, the present invention similarly remedies these problems by setting specific amounts of pure sulfur derived from crosslinking agents in the tread and sidewall, and further adjusting the amounts to satisfy a specific relationship.

The problem of thin film phenomenon shown in Fig 1 (b) can be promoted by the difference in the net sulfur content between thin and thick portions of the wing, resulting from the migration of pure sulfur from the wing to the tread during vulcanization. Specifically, during vulcanization, pure sulfur migrates from the wing to the tread as shown in Fig. 4 (a) showing a cross-sectional schematic diagram of the phenomenon of migration of pure sulfur. This creates a distribution of pure sulfur in the wing as shown in Fig. 4(b) representing a distribution graph showing the net sulfur content in cross-section (1) of a relatively thick portion of and cross-section (2) of a relatively thin portion of the wing after vulcanization. Moreover, as shown in Fig. 4(b), in cross-section (2) of the thin portion of the wing, a large amount of sulfur flows into the tread at a distance of, for example, 1.0 mm from the mold surface, and the net sulfur content in the thin portion consequently becomes lower than the designed value. Accordingly, curing of this portion is delayed so that curing is not allowed to proceed, and this portion thus remains soft for a prolonged period of time. During this period, curing in the tread is accelerated by the flow of sulfur thereinto, and the tread thus pushes and further stretches the wing thinly. Such a vicious circle causes the formation of a thin film of the wing. In contrast, in the present invention, the net sulfur content in each of the adjacent components is adjusted so as to alleviate the delay in initial curing of the wing or sidewall and thereby suppress the migration of the crosslinking agents from these components to the tread during vulcanization of the tire. As a result, the thin film phenomenon and other problems can be prevented while maintaining the required performance of a tire such as initial grip performance and abrasion resistance.

The pneumatic tire of the present invention includes a tread and a wing or sidewall adjacent to the tread.

The tread is a component that comes into direct contact with the road surface. The wing is a component located between the tread and sidewall at the shoulder portion. Specifically, they are components as shown in Figs. 1 and 3 of JP-A 2007-176267 (which is incorporated by reference in the entirety), and elsewhere. The sidewall is a component extending from the shoulder portion to the bead portion, located outside the carcass. Specifically, it is a component as shown in Fig. 1 of JP-A 2005-280612, Fig. 1 of JP-A 2000-185529 (which are incorporated by reference in their entirety), and elsewhere.

In the present invention, the tread, wing, and sidewall are respectively formed from a rubber composition for a tread, a rubber composition for a wing, and a rubber composition for a sidewall, all of which contain a crosslinking agent.

The crosslinking agent may be a sulfur-containing compound having a cross-linking effect. Examples thereof include sulfur crosslinking agents, sulfur-containing hybrid crosslinking agents, and silane coupling agents added in the final kneading step.

The sulfur crosslinking agents include sulfur generally used for vulcanization in the rubber field. Specific examples thereof include powdered sulfur, precipitated sulfur, colloidal sulfur, insoluble sulfur, and highly dispersible sulfur.

The sulfur-containing hybrid crosslinking agents include alkylsulfide crosslinking agents such as alkylphenol-sulfur chloride condensates; hexamethylene-1,6-bis(thiosulfate), disodium salt, dehydrate; and 1,6-bis(N,N'-dibenzylthiocarbamoyldithio)hexane, and dithiophosphates. More specifically, products such as Tackirol V200 (Taoka Chemical Co., Ltd.), DURALINK HTS (Flexsys), Vulcuren VP KA9188 (LANXESS), and Rhenogran SDT-50 (phosphoryl polysulfide) (Rhein Chemie) are commercially available.

Furthermore, silane coupling agent(s) mixed (added) in the final kneading step are also regarded as the crosslinking agent in the present invention. However, silane coupling agent(s) mixed in the base kneading step are not regarded as such because they preferentially react with silica.

The silane coupling agent may be, for example, a sulfur (sulfide bond)-containing compound that has been used in combination with silica in the rubber industry. Examples thereof include sulfide, mercapto, vinyl, amino, glycidoxy, nitro, and chloro silane coupling agents. More specifically, products such as Si69 and Si75 (Evonik) are commercially available.

In the present invention, the following relationship is satisfied between the net sulfur content derived from crosslinking agents in the rubber composition for a tread and the net sulfur content derived from crosslinking agents in the rubber composition for a wing adjacent to the tread, or between the net sulfur content derived from crosslinking agents in the rubber composition for a tread and the net sulfur content derived from crosslinking agents in the rubber composition for a sidewall adjacent to the tread:

sulfur content derived from crosslinking agents in the rubber composition for a tread) ≤ 2.5.

The ratio exceeding 2.5 is likely to cause a delay in the initial curing rate t10 of the wing or sidewall, leading to the thin film phenomenon and peel-off failure.

The ratio of the net sulfur contents (addition ratio) is not particularly limited as long as it is 2.5 or less. It is preferably in the range of 0.75 to 2.4, and more preferably in the range of 1.0 to 2.3. In the present invention, the net sulfur content derived from crosslinking agents refers to the total amount of sulfur contained in all the crosslinking agents mixed (added).

Additionally, in the present invention, the following relationship is preferably satisfied between the initial curing rate (t10) of the rubber composition for a tread and the initial curing rate (t10) of the rubber composition for a wing or sidewall:

0.4 ≤ (t10 of the rubber composition for a wing or sidewall)/(t10 of the rubber composition for a tread) ≤ 2.5.

In this case, the thin film phenomenon can be prevented. The t10 ratio (0.4 to 2.5) is more preferably in the range of 0.5 to 2.3.

Next, the rubber composition for a tread and the rubber composition for a wing or the rubber composition for a sidewall used in the present invention are described.

(Rubber composition for tread)

The rubber composition for a tread has a total net sulfur content derived from crosslinking agents of 0.56 to 1.15 parts by mass per 100 parts by mass of the rubber component of the rubber composition for a tread. With a content of less than 0.56 parts by mass, the amount of sulfur that migrates from the wing or sidewall to the tread tends to be large, causing a delay in the t10 of the wing or sidewall rubber. As a result, the finished bonding surface tends to be in poor condition. With a content of more than 1.15 parts by mass, the tread rubber tends to have poor abrasion resistance and undergo deterioration over time. The total net sulfur content is preferably 0.6 to 1.10 parts by mass.

The rubber component of the rubber composition for a tread is not particularly limited. Examples thereof include isoprene-based rubbers such as natural rubber (NR) and isoprene rubber (IR); and other diene rubbers such as butadiene rubber (BR), styrene-butadiene rubber (SBR), styrene-isoprene-butadiene rubber (SIBR), chloroprene rubber (CR), and acrylonitrile butadiene rubber (NBR). Among them, isoprene-based rubbers, BR, and SBR are preferred in view of achieving good durability while maintaining good handling stability, fuel economy, and elongation at break. In particular, in the case of summer tires, it is preferred that BR and SBR be used in combination. In the case of studless winter tires, it is preferred that BR and an isoprene-based rubber be used in combination because on-ice performance is also important for these tires.

Any BR generally used in the tire industry may be used. Examples thereof include high-cis BR such as BR1220 (ZEON CORPORATION) and BR150B (Ube Industries, Ltd.); BR containing 1,2-syndiotactic polybutadiene crystals (SPB), such as VCR412 and VCR617 (Ube Industries, Ltd.); high-vinyl BR such as Europrene BR HV80 (Polimeri Europa); and BR synthesized using a rare earth catalyst (rare earth BR). Tin-modified butadiene rubber (tin-modified BR), which has been modified by a tin compound, can also be used. Among them, rare earth BR is preferred in view of achieving good durability while maintaining good handling stability, fuel economy, and elongation at break. Various types of modified BR for silica formulations can also be suitably used.

Examples of rare earth BR include those conventionally known, such as those synthesized using rare earth catalysts (catalysts containing lanthanide rare earth element compounds, organoaluminum compounds, aluminoxanes, or halogen-containing compounds, optionally with Lewis bases) and the like. Among them, Nd-based BR synthesized using a neodymium-based catalyst is preferred.

Also, examples of various types of modified BR for silica formulations include those conventionally known, such as BR whose polymer terminal(s) and/or backbone have been modified by various modifiers. Examples thereof include the modified BR disclosed in JP-A 2010-077412, JP-A 2006-274010, JP-A 2009-227858, JP-A 2006-306962, and JP-A 2009-275178 (which are incorporated by reference in their entirety), and the like. Specifically, modified BR having an

Mw of $1.0 \times 10^5$ to $2.5 \times 10^6$ obtained by reaction with a modifier represented by the following formula (I) can be suitably used:

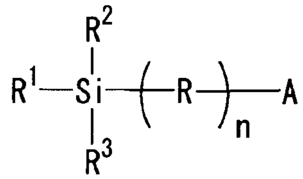

(I)

wherein n represents an integer of 1 to 10; R represents a divalent hydrocarbon group (such as $-CH_2-$); $R^1$, $R^2$, and $R^3$ each independently represent a C1-C4 hydrocarbyl or C1-C4 hydrocarbyloxy group, provided that at least one of $R^1$, $R^2$, and $R^3$ is a hydrocarbyloxy group; and A represents a functional group containing a nitrogen atom.

The amount of BR based on 100% by mass of the rubber component is preferably 35% by mass or more, and more preferably 45% by mass or more. The amount of BR is preferably 75% by mass or less, and more preferably 65% by mass or less. BR in an amount in that range can lead to good durability while maintaining good abrasion resistance, handling stability, fuel economy, and elongation at break.

Examples of NR as an isoprene-based rubber include those generally used in the tire industry, such as SIR20, RSS#3, and TSR20. Examples of IR also include those generally used in the tire industry, such as IR2200. Any SBR can be used, and examples thereof include solution-polymerized SBR and emulsion-polymerized SBR. In particular, various types of modified SBR for silica formulations can be suitably used. Examples thereof include those conventionally known, such as SBR whose polymer terminal(s) and/or backbone have been modified by various modifiers. Specific examples thereof include the modified SBR disclosed in JP-A 2010-077412, JP-A 2006-274010, JP-A 2009-227858, JP-A 2006-306962, and JP-A 2009-275178 (which are incorporated by reference in their entirety), and the like. More specifically, modified SBR having an Mw of $1.0 \times 10^5$ to $2.5 \times 10^6$ obtained by reaction with a modifier represented by the above formula (I) can be suitably used.

In the rubber composition for a tread, the total combined amount of isoprene-based rubber and SBR, based on 100% by mass of the rubber component, is preferably 25 to 100% by mass. In the case of summer tires, the rubber composition for a tread preferably contains SBR in that range. In the case of studless winter tires, the rubber composition for a tread preferably contains an isoprene-based rubber in that range.

The rubber composition for a tread may contain carbon black and/or silica. In the case of adding carbon black and/or silica, the amount thereof may be appropriately determined according to the required performance of a tread, such as abrasion resistance. The total combined amount of carbon black and silica is preferably 30 to 180 parts by mass, and more preferably 45 to 120 parts by mass, per 100 parts by mass of the rubber component.

The rubber composition for a tread may contain, in addition to the components described above, additives conventionally used in the rubber industry. Examples thereof include other reinforcing fillers, waxes, antioxidants, age resistors, stearic acid, and zinc oxide. Vulcanization accelerators such as guanidine, aldehyde-amine, aldehyde-ammonia, thiazole, sulfenamide, thiourea, dithiocarbamate, and xanthate vulcanization accelerators may also be added.

(Rubber composition for wing and rubber composition for sidewall)

Each of the rubber composition for a wing and the rubber composition for a sidewall has a total net sulfur content derived from crosslinking agents of 1.3 to 2.5 parts by mass per 100 parts by mass of the rubber component of the rubber composition for a wing or sidewall. With a content of less than 1.3 parts by mass, a large amount of vulcanization accelerators may be needed, which tends to result in lower elongation at break. With a content of more than 2.5 parts by mass, the elastic modulus $E^*$ is likely to increase and the elongation at break EB is likely to decrease after oxidation degradation, which rather tends to result in poor durability. In addition, particularly in the case of tires for trucks and buses, the difference in the concentration between the adjacent sidewall and ply tends to be large, leading to further decreased durability. The total net sulfur content is preferably 1.4 to 2.0 parts by mass.

The rubber component of the rubber composition for a wing or sidewall is not particularly limited. The same types of diene rubbers as mentioned for the rubber composition for a tread can be used. Among them, BR, isoprene-based rubbers, and SBR are preferred in view of achieving good durability while maintaining good handling stability, fuel economy, and elongation at break. It is more preferred that BR and an isoprene-based rubber be used in combination. Suitable examples of BR are high-cis BR (Co-based BR, Nd-based BR, etc.), SPB-containing BR, and tin-modified BR. The same types of isoprene-based rubbers and SBR as mentioned above can be used.

The amount of BR based on 100% by mass of the rubber component is preferably 35% by mass or more, and more preferably 40% by mass or more. The amount of BR is preferably 75% by mass or less, and more preferably 65% by mass or less. BR in an amount in that range can lead to good flex crack growth resistance and durability while

maintaining good handling stability, fuel economy, and elongation at break.

In each of the rubber composition for a wing and the rubber composition for a sidewall, the amount of isoprene-based rubber based on 100% by mass of the rubber component is preferably 25 to 65% by mass, and more preferably 35 to 55% by mass. In the case of adding SBR, the amount thereof is preferably 15 to 40% by mass, and more preferably 20 to 35% by mass, based on 100% by mass of the rubber component.

Each of the rubber composition for a wing and the rubber composition for a sidewall may contain carbon black. In the case of adding carbon black, although the amount thereof may be appropriately determined according to the required performance of the sidewall or wing, such as flex crack growth resistance, it is preferably 20 to 80 parts by mass, and more preferably 30 to 60 parts by mass, per 100 parts by mass of the rubber component.

Each of the rubber composition for a wing and the rubber composition for a sidewall may contain, in addition to the rubber component and carbon black, the same additives as mentioned for the rubber composition for a tread.

(Pneumatic tire)

The pneumatic tire of the present invention can be produced by a conventionally known method, such as the one described below.

First, components other than the crosslinking agent and vulcanization accelerator are charged (added) into a rubber kneader such as a Banbury mixer or an open roll mill and kneaded therein (base kneading step) to obtain a kneaded mixture. Subsequently, the crosslinking agent and vulcanization accelerator are (charged) added into the kneaded mixture, followed by kneading. In this way, an unvulcanized rubber composition for a tread, an unvulcanized rubber composition for a wing, and an unvulcanized rubber composition for a sidewall can be prepared.

Next, each of these unvulcanized rubber compositions is extruded into the shape of a tread, wing, or sidewall; the extrudates are arranged and assembled with other tire components in a tire building machine to prepare an unvulcanized tire; and the unvulcanized tire is then heated and pressed in a vulcanizer. A pneumatic tire can be thus produced.

The pneumatic tire of the present invention is suitable for passenger vehicles, large passenger vehicles, large SUVs, heavy load vehicles such as trucks and buses, and light trucks. It can be used as a summer tire or a studless winter tire for these vehicles.

EXAMPLES

The present invention is more specifically described with reference to examples of tires for passenger vehicles with a TOS structure, but the present invention is not limited to these examples.

<Preparation of terminal modifier>

A measuring flask (100-mL) was charged with 23.6 g of 3-(N,N-dimethylamino)propyltrimethoxysilane (AZmax. Co.) in a nitrogen atmosphere, and was further charged with anhydrous hexane (Kanto Chemical Co., Inc.) to thereby prepare a terminal modifier in a total amount of 100 mL.

<Copolymer Preparation 1>

A sufficiently nitrogen-purged, pressure-resistant vessel (30-L) was charged with 18 L of n-hexane (Kanto Chemical Co., Inc.), 2000 g of butadiene (Takachiho Trading Co., Ltd.), and 2 mmol of tetramethylethylenediamine (Kanto Chemical Co., Inc.), and then the temperature was raised to 60°C. Next, 10.3 mL of butyllithium (Kanto Chemical Co., Inc.) was added to the mixture, and then the temperature was raised to 50°C, followed by stirring for three hours. Next, 11.5 mL of the prepared terminal modifier was added to the resulting mixture, followed by stirring for 30 minutes. After 15 mL of methanol (Kanto Chemical Co., Inc.) and 0.1 g of 2,6-di-tert-butyl-p-cresol (Ouchi Shinko Chemical Industrial Co., Ltd.) were added to the reaction mixture, and the reaction mixture was transferred to a stainless steel vessel containing 18 L of methanol to thereby collect aggregates. The aggregates were dried under reduced pressure for 24 hours, thus obtaining a modified BR. The modified BR had an Mw of 440,000 and a vinyl content of 13%.

<Copolymer Preparation 2>

A sufficiently nitrogen-purged, pressure-resistant vessel (30-L) was charged with 18 L of n-hexane, 740 g of styrene (Kanto Chemical Co., Inc.), 1260 g of butadiene, and 10 mmol of tetramethylethylenediamine, and then the temperature was raised to 40°C. Next, 10 mL of butyllithium was added to the mixture, and then the temperature was raised to 50°C, followed by stirring for three hours. Next, 11 mL of the prepared terminal modifier was added to the resulting mixture, followed by stirring for 30 minutes. After 15 mL of methanol and 0.1 g of 2,6-di-tert-butyl-p-cresol were

added to the reaction mixture, the reaction mixture was transferred to a stainless steel vessel containing 18 L of methanol to thereby collect aggregates. The aggregates were dried under reduced pressure for 24 hours, thus obtaining a modified SBR. The modified SBR had an Mw of 270,000, a vinyl content of 56%, and a styrene content of 37% by mass.

The modified BR and modified SBR thus obtained were analyzed for Mw, vinyl content, and styrene content by the following methods.

<Measurement of weight average molecular weight (Mw)>

The weight average molecular weight (Mw) of each copolymer was determined from a value measured using a gel permeation chromatograph (GPC) (GPC-8000 series available from Tosoh Corporation; detector: differential refractometer; column: TSKGEL SUPERMULTIPORE HZ-M available from Tosoh Corporation) relative to polystyrene standards.

<Measurement of vinyl content and styrene content>

The structure of each copolymer was identified using a device of JNM-ECA series (JEOL Ltd.). From the measurement results, the vinyl content and the styrene content in the copolymer were calculated.

The chemical agents used in the examples and the comparative examples are listed below.

NR: TSR20
BR(1): CB25 (high-cis BR synthesized using a Nd-based catalyst; Tg: -110°C) available from LANXESS
BR(2) : BR150B (high-cis BR synthesized using a Co-based catalyst; Tg: -108°C) available from Ube Industries, Ltd.
BR(3): Nipol BR1250H available from ZEON CORPORATION
BR(4): VCR617 available from Ube Industries, Ltd.
BR(5): modified BR prepared in Copolymer Preparation 1
SBR(1): modified SBR prepared in Copolymer Preparation 2
SBR(2): SBR1502 available from JSR
Carbon black (1): HP160 ($N_2SA$: 165 $m^2/g$) available from Columbia Carbon
Carbon black (2): SHOBLACK N550 available from Cabot Corporation
Silica: ULTRASIL VN3 ($N_2SA$: 175 $m^2/g$) available from Evonik
Resin: SYLVARES SA85 (copolymer of $\alpha$-methylstyrene and styrene; softening point: 85°C) available from Arizona Chemical
Oil: Vivatec 500 (TDAE) available from H&R
Wax: Ozoace 0355 available from Nippon Seiro Co., Ltd.
Antioxidant (1): ANTIGENE 6C (N-(1,3-dimethylbutyl)-N'-phenyl-p-phenylenediamine) available from Sumitomo Chemical Co., Ltd.
Antioxidant (2): NOCRAC 224 (2,2,4-trimethyl-1,2-dihydroquinoline polymer) available from Ouchi Shinko Chemical Industrial Co., Ltd.
Stearic acid: stearic acid "Tsubaki" available from NOF Corporation
Zinc oxide: Ginrei R available from Toho Zinc Co., Ltd.
Silane coupling agent (1): NXTZ45 available from Momentive
Silane coupling agent (2): Si75 available from Evonik
Crosslinking agent (1): Vulcuren VP KA 9188 (1,6-bis(N,N'-dibenzylthiocarbamoyldithio)hexane) (sulfur content: 20.6%) available from LANXESS
Crosslinking agent (2): DURALINK HTS (hexamethylene-1,6-bis(thiosulfate), disodium salt, dehydrate (organic thiosulfate compound)) (sulfur content: 56%) available from Flexsys
Crosslinking agent (3): Tackirol V200 (alkylphenol-sulfur chloride condensate) (sulfur content: 24% by mass) available from Taoka Chemical Co., Ltd.
Crosslinking agent (4): HK-200-5 (5% oil-containing powdered sulfur) available from Hosoi Chemical Industry Co., Ltd.
Vulcanization accelerator (1): Nocceler NS-G (N-tert-butyl-2-benzothiazolylsulfenamide) available from Ouchi Shinko Chemical Industrial Co., Ltd.
Vulcanization accelerator (2): Nocceler DZ (N,N-dicyclohexyl-2-benzothiazolylsulfenamide) available from Ouchi Shinko Chemical Industrial Co., Ltd.
Vulcanization accelerator (3): Nocceler D (1,3-diphenylguanidine) available from Ouchi Shinko Chemical Industrial Co., Ltd.

<Examples and Comparative Examples>

(Rubber composition for tread)

According to the composition for summer tires shown in Table 1 or the composition for studless winter tires shown in Table 2, the total amount of the rubber component, the total amount of carbon black, half of the amount of silica, and half of the amount of silane coupling agent were kneaded using a Banbury mixer for five minutes at 150°C. Then, the remaining ingredients other than crosslinking agents and vulcanization accelerators were kneaded for four minutes at 150°C, thus obtaining a kneaded mixture (base kneading step). Next, the crosslinking agent (s) and the vulcanization accelerators were added to the kneaded mixture, followed by kneading using an open roll mill for four minutes at 105°C, thus obtaining an unvulcanized rubber composition (final kneading step).

The unvulcanized rubber composition was press-vulcanized for 12 minutes at 170°C, thus obtaining a vulcanized rubber composition for a tread.

(Rubber composition for wing)

According to the composition shown in Table 3, the ingredients other than crosslinking agents and vulcanization accelerators were kneaded using a Banbury mixer for five minutes at 170°C, thus obtaining a kneaded mixture (base kneading step). Then, the crosslinking agent(s) and the vulcanization accelerator (s) were added to the kneaded mixture, followed by kneading using an open roll mill for four minutes at 105°C, thus obtaining an unvulcanized rubber composition (final kneading step).

The unvulcanized rubber composition thus obtained was press-vulcanized for 12 minutes at 170°C, thus obtaining a vulcanized rubber composition for a wing.

(Pneumatic tire)

Each unvulcanized rubber composition for a tread and each unvulcanized rubber composition for a wing thus obtained were extruded into the shapes of the respective tire components; and the extrudates were assembled with other tire components in a tire building machine and then vulcanized for 12 minutes at 170°C, whereby each test tire (tire size: 245/40R18, for passenger vehicles) was produced (crosslinking step). Table 4 shows values of the net sulfur content ratio, i.e., [(the net sulfur content in the rubber composition for a wing)/(the net sulfur content in the rubber composition for a tread)], of the test tires.

The unvulcanized and vulcanized rubber compositions for a tread and for a wing, and the test tires were evaluated as follows. Tables 1 to 3 and 5 show the evaluation results.

(Curing rate)

Each unvulcanized rubber composition was subjected to a vulcanization test at a measurement temperature of 160°C using an oscillating type vulcanization tester (curelastometer) described in JIS K 6300, and a curing rate curve of time plotted against torque was then prepared. The time t10 (min.) at which the torque reached ML + 0.1 ME was calculated, wherein ML is the minimum value, MH is the maximum value of the torque in the curing rate curve, and ME is the difference therebetween (MH - ML).

(Viscoelasticity test)

The complex elastic modulus $E^*$ (MPa) and the loss tangent tan $\delta$ of the vulcanized rubber compositions were measured using a viscoelasticity spectrometer VES (Iwamoto Seisakusho Co., Ltd.) at a temperature of 40°C, a frequency of 10Hz, an initial strain of 10%, and a dynamic strain of 2%. A higher $E^*$ indicates higher rigidity and thus better handling stability. A lower tan $\delta$ indicates lower heat build-up and thus better fuel economy.

(Tensile test)

A No. 3 dumbbell-shaped sample prepared from each vulcanized rubber composition was subjected to a tensile test at room temperature in accordance with JIS K6251 "Rubber, vulcanized or thermoplastic - Determination of tensile stress-strain properties" to measure the elongation at break EB (%). A greater EB indicates better elongation at break (better durability).

(Abrasion resistance)

The test tires were put on a domestic FR (front wheel drive) vehicle of 2000 cc displacement, and the vehicle was run on a dry asphalt surface in a test course. Then, the depth of the remaining groove of the tire tread rubber was measured (the depth in brand new condition was 8.0 mm) and evaluated for abrasion resistance. The greater the remaining groove depth, the better the abrasion resistance. Each measured depth of the remaining groove was expressed as an index (abrasion resistance index) relative to that of the rubber composition 14 for a tread (= 100) in the case of the summer tire formulations in Table 1, and relative to that of the rubber composition 18 for a tread (= 100) in the case of the studless winter tire formulations in Table 2. A higher index indicates better abrasion resistance.

(Condition of the finished bonding surface between the tread portion and the wing portion)

The condition of the finished bonding surface between the tread and wing of each test tire was evaluated using an index, based on the observation of extrudability of the wing rubber in the vicinity of the bonding surface, and curling, peel-off, and falling of a thin film of the wing rubber, as well as bareness (i.e., keloidal appearance). If the extrudability is good, then the heat build-up is low and the wing rubber with predetermined dimensions, smooth edges (without edge irregularities) and uniform thicknesses can maintain its shape. The condition of the finished bonding surface of 10 produced tires of each kind was evaluated using an index (finish index). The finish index 100 indicates a suitable structure for the process. The finish index 110 indicates excellent stability and uniformity of the finished dimensions. The finish index 90 indicates frequent occurrence of problems and instability of the finished dimensions even in one tire, which means an unsuitable structure for the process.

[Table 1]

| Summer tire formulation | | | Rubber composition for tread | | | | | | | | | | | | | | |
|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 |
| Composition (part(s) by mass) | Base kneading step | NR | | | | | | | | | | | | | | | |
| | | BR (1) | 25 | 25 | 25 | 25 | 25 | 25 | 25 | 25 | 25 | 25 | 25 | 25 | 25 | 25 | 25 |
| | | BR (2) | | | | | | | | | | | | | | | |
| | | BR (3) | | | | | | | | | | | | | | | |
| | | BR (4) | | | | | | | | | | | | | | | |
| | | BR (5) | 25 | 25 | 25 | 25 | 25 | 25 | 25 | 25 | 25 | 25 | 25 | 25 | 25 | 25 | 25 |
| | | SBR (1) | 50 | 50 | 50 | 50 | 50 | 50 | 50 | 50 | 50 | 50 | 50 | 50 | 50 | 50 | 50 |
| | | SBR (2) | | | | | | | | | | | | | | | |
| | | Carbon black (1) | 25 | 25 | 25 | 25 | 25 | 25 | 25 | 25 | 25 | 37 | 37 | 25 | 25 | 25 | 25 |
| | | Carbon black (2) | | | | | | | | | | | | | | | |
| | | Silica | 60 | 60 | 60 | 60 | 60 | 60 | 60 | 60 | 60 | 45 | 45 | 60 | 60 | 60 | 60 |
| | | Resin | 10 | 10 | 10 | 10 | 10 | 10 | 10 | 10 | 10 | 10 | 10 | 10 | 10 | 10 | 10 |
| | | Oil | 10 | 10 | 10 | 10 | 10 | 10 | 10 | 10 | 10 | 10 | 10 | 10 | 10 | 10 | 10 |
| | | Wax | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | Antioxidant (1) | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | Antioxidant (2) | 1 | 1 | 1 | 1 | 1 | 1 | 1 | 1 | 1 | 1 | 1 | 1 | 1 | 1 | 1 |
| | | Stearic acid | 3 | 3 | 3 | 3 | 3 | 3 | 3 | 3 | 3 | 3 | 3 | 3 | 3 | 3 | 3 |
| | | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | Silane coupling agent (1) | | | | | | | | | | | 2.7 | | | | |
| | | Silane coupling agent (2) | 4.8 | 4.8 | 4.8 | 4.8 | 4.8 | 4.8 | 4.8 | 4.8 | 4.8 | 3.6 | | 4.8 | 4.8 | 4.8 | 4.8 |
| | Final kneading step | Crosslinking agent (1) (sulfur content: 20. 6%) | | | | 2 | | | | | | | | | | | |
| | | Crosslinking agent (2) (sulfur content: 56%) | | | | | 0.8 | | | | | | | | | | |
| | | Crosslinking agent (3) (sulfur content: 24%) | | | | | | | | | | | | | | | |
| | | Crosslinking agent (4) (sulfur content: 95%) | 0.700 | 0.590 | 1.060 | 0.600 | 0.579 | 0.740 | 0.740 | 0.740 | 0.740 | 0.740 | 0.740 | 0.550 | 0.400 | 1.232 | 1.800 |
| | | Vulcanization accelerator (1) | 2 | 2 | 1.6 | 2 | 2 | 2.5 | 2.7 | 1.5 | 1.5 | 2 | 2 | 2 | 3 | 1.5 | 1.5 |
| | | Vulcanization accelerator (2) | | | | | | | | | | | | | | | |
| | | Vulcanization accelerator (3) | 2 | 3 | 2 | 2 | 2 | 0.5 | 0.3 | 3.5 | 4 | 1.2 | 0.7 | 3.5 | 4 | 2 | 1 |
| Net sulfur content | | | 0.665 | 0.561 | 1.007 | 0.982 | 0.99805 | 0.703 | 0.703 | 0.703 | 0.703 | 0.703 | 0.703 | 0.523 | 0.380 | 1.170 | 1.710 |
| Evaluation | | Curing rate t10 (min) (target: 2.0 to 5.0) | 3.5 | 3.5 | 3.4 | 3.6 | 3.2 | 4.5 | 4.7 | 2.7 | 2.3 | 2.9 | 2.7 | 3.6 | 3.5 | 3.1 | 3.2 |
| | | $E^*$ at 40°C, 2% amplitude (target: 8.0 to 9.0) | 8.5 | 8.46 | 8.58 | 8.61 | 8.59 | 8.54 | 8.47 | 8.49 | 8.44 | 8.84 | 8.94 | 8.44 | 8.52 | 8.67 | 8.72 |
| | | tan δ at 40°C (target: ≦ 0.24) | 0.202 | 0.22 | 0.195 | 0.191 | 0.19 | 0.201 | 0.204 | 0.21 | 0.213 | 0.239 | 0.191 | 0.245 | 0.251 | 0.194 | 0.192 |
| | | EB% (target: > 500) | 555 | 585 | 535 | 555 | 525 | 560 | 555 | 535 | 515 | 595 | 615 | 605 | 615 | 490 | 445 |
| | | Abrasion resistance index (target: ≧ 105) | 115 | 126 | 107 | 117 | 110 | 115 | 115 | 112 | 109 | 135 | 145 | 124 | 127 | 100 | 91 |

[Table 2]

| Studless winter tire formulation | | | Rubber composition for tread | | |
|---|---|---|---|---|---|
| | | | 16 | 17 | 18 |
| Composition (part(s) by mass) | Base kneading step | NR | 40 | 40 | 40 |
| | | BR (1) | 60 | 60 | 60 |
| | | BR (2) | | | |
| | | BR (3) | | | |
| | | BR (4) | | | |
| | | BR (5) | | | |
| | | SBR (1) | | | |
| | | SBR (2) | | | |
| | | Carbon black (1) | 5 | 5 | 5 |
| | | Carbon black (2) | | | |
| | | Silica | 60 | 60 | 60 |
| | | Resin | 8 | 8 | 8 |
| | | Oil | 20 | 20 | 20 |
| | | Wax | 1.5 | 1.5 | 1.5 |
| | | Antioxidant (1) | 2 | 2 | 2 |
| | | Antioxidant (2) | 1 | 1 | 1 |
| | | Stearic acid | 3 | 3 | 3 |
| | | Zinc oxide | 2.5 | 2.5 | 2.5 |
| | | Silane coupling agent (1) | | | |
| | | Silane coupling agent (2) | 4.8 | 4.8 | 4.8 |
| | Final kneading step | Crosslinking agent (1) (sulfur content: 20. 6%) | | | |
| | | Crosslinking agent (2) (sulfur content: 56%) | | | |
| | | Crosslinking agent (3) (sulfur content: 24%) | | | |
| | | Crosslinking agent (4) (sulfur content: 95%) | 0.740 | 0.550 | 1.232 |
| | | Vulcanization accelerator (1) | 2 | 2.5 | 1.5 |
| | | Vulcanization accelerator (2) | | | |
| | | Vulcanization accelerator (3) | 3 | 3.5 | 2.5 |
| Net sulfur content | | | 0.703 | 0.523 | 1.170 |
| Evaluation | | Curing rate t10 (min) (target: 2.0 to 5.0) | 3.5 | 3.4 | 3.5 |
| | | E* at 40°C, 2% amplitude (target: 2.5 to 3.0) | 2.8 | 2.75 | 2.82 |
| | | tan $\delta$ at 40°C (target: ≦ 0.24) | 0.228 | 0.234 | 0.234 |
| | | EB% (target: > 500) | 705 | 700 | 665 |
| | | Abrasion resistance index (target: > 105) | 120 | 120 | 100 |

[Table 3]

| | | | Rubber composition for wing | | | | | | | | | |
|---|---|---|---|---|---|---|---|---|---|---|---|---|
| | | | 1 | 2 | 3 | 4 | 5 | 6 | 7 | 8 | 9 | 10 |
| Composition (part(s) by mass) | Base kneading step | NR | 50 | 50 | 50 | 50 | 50 | 50 | 50 | 50 | 45 | 40 |
| | | BR (1) | | | | | | | | | | |
| | | BR (2) | 50 | 50 | 50 | 50 | 50 | 50 | 50 | 50 | | 30 |
| | | BR (3) | | | | | | | | | 25 | |
| | | BR (4) | | | | | | | | | 30 | |
| | | BR (5) | | | | | | | | | | |
| | | SBR (1) | | | | | | | | | | |
| | | SBR (2) | | | | | | | | | | 30 |
| | | Carbon black (1) | | | | | | | | | | |
| | | Carbon black (2) | 50 | 50 | 50 | 50 | 50 | 50 | 50 | 50 | 40 | 50 |
| | | Silica | | | | | | | | | | |
| | | Resin | | | | | | | | | | |
| | | Oil | 10 | 10 | 10 | 16 | 10 | 10 | 10 | 16 | 10 | 13 |
| | | Wax | 1.5 | 1.5 | 1.5 | 1.5 | 1.5 | 1.5 | 1.5 | 1.5 | 1.5 | 1.5 |
| | | Antioxidant (1) | 3 | 3 | 3 | 3 | 3 | 3 | 3 | 3 | 3 | 3 |
| | | Antioxidant (2) | 1 | 1 | 1 | 1 | 1 | 1 | 1 | 1 | 1 | 1 |
| | | Stearic acid | 2 | 2 | 2 | 2 | 2 | 2 | 2 | 2 | 2 | 2 |
| | | Zinc oxide | 3 | 3 | 3 | 3 | 3 | 3 | 3 | 3 | 3 | 3 |
| | | Silane coupling agent (1) | | | | | | | | | | |
| | | Silane coupling agent (2) | | | | | | | | | | |
| | Final kneading step | Crosslinking agent (1) (sulfur content: 20. 6%) | | | | | | | | | | |
| | | Crosslinking agent (2) (sulfur content: 56%) | | | | | | | | | | |
| | | Crosslinking agent (3) (sulfur content: 24%) | | | | | 0.2 | | | | | |
| | | Crosslinking agent (4) (sulfur content: 95%) | 1.580 | 1.370 | 2.220 | 2.630 | 1.529 | 1.580 | 1.260 | 2.840 | 1.580 | 1.580 |
| | | Vulcanization accelerator (1) | 0.7 | 1.0 | 0.55 | 0.55 | 0.6 | 0.5 | 1.2 | 0.4 | 0.7 | 0.7 |
| | | Vulcanization accelerator (2) | | | | | | 0.3 | | | | |
| | | Vulcanization accelerator (3) | | | | | | | | | | |
| Net sulfur content | | | 1.501 | 1.302 | 2.109 | 2.499 | 1.501 | 1.501 | 1.197 | 2.698 | 1.501 | 1.501 |
| Evaluation | | Curing rate t10 (min) (target: 2.0 to 5.0) | 3.7 | 3.9 | 3.4 | 2.9 | 2.5 | 4.1 | 3.2 | 3.7 | 3.6 | 3.9 |
| | | E* at 40°C, 2% amplitude (target: 2.7 to 3.5) | 3.15 | 3.17 | 3.22 | 3.33 | 3.07 | 3.21 | 3.15 | 3.37 | 3.44 | 3.37 |
| | | tan δ at 40°C (target: < 0.2) | 0.179 | 0.172 | 0.188 | 0.194 | 0.181 | 0.174 | 0.169 | 0.196 | 0.121 | 0.182 |
| | | EB% (target: > 550) | 605 | 585 | 615 | 625 | 595 | 610 | 555 | 635 | 595 | 635 |

[Table 4]

| Net sulfur content in wing / Net sulfur content in tread | | | Rubber composition for tread | | | | | | | | | | | | | | | | | |
|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 | 18 |
| | | | 0.665 | 0.561 | 1.007 | 0.982 | 0.998 | 0.703 | 0.703 | 0.703 | 0.703 | 0.703 | 0.703 | 0.523 | 0.380 | 1.170 | 1.710 | 0.703 | 0.523 | 1.170 |
| Rubber composition for wing | 1 | 1.501 | 2.26 | 2.68 | 1.49 | 1.53 | 1.50 | 2.14 | 2.14 | 2.14 | 2.14 | 2.14 | 2.14 | 2.87 | 3.95 | 1.28 | 0.88 | 2.14 | 2.87 | 1.31 |
| | 2 | 1.3015 | 1.96 | 2.32 | 1.29 | 1.33 | 1.30 | 1.85 | 1.85 | 1.85 | 1.85 | 1.85 | 1.85 | 2.49 | 3.43 | 1.11 | 0.76 | 1.85 | 2.49 | 1.14 |
| | 3 | 2.109 | 3.17 | 3.76 | 2.09 | 2.15 | 2.11 | 3.00 | 3.00 | 3.00 | 3.00 | 3.00 | 3.00 | 4.04 | 5.55 | 1.80 | 1.23 | 3.00 | 4.04 | 1.85 |
| | 4 | 2.499 | 3.76 | 4.46 | 2.48 | 2.54 | 2.504 | 3.55 | 3.55 | 3.55 | 3.55 | 3.55 | 3.55 | 4.78 | 6.58 | 2.14 | 1.46 | 3.55 | 4.78 | 2.19 |
| | 5 | 1.501 | 2.26 | 2.68 | 1.49 | 1.53 | 1.504 | 2.14 | 2.14 | 2.14 | 2.14 | 2.14 | 2.14 | 2.87 | 3.95 | 1.28 | 0.88 | 2.14 | 2.87 | 1.32 |
| | 6 | 1.501 | 2.26 | 2.68 | 1.49 | 1.53 | 1.504 | 2.14 | 2.14 | 2.14 | 2.14 | 2.14 | 2.14 | 2.87 | 3.95 | 1.28 | 0.88 | 2.14 | 2.87 | 1.32 |
| | 7 | 1.197 | 1.80 | 2.14 | 1.19 | 1.22 | 1.199 | 1.70 | 1.70 | 1.70 | 1.70 | 1.70 | 1.70 | 2.29 | 3.15 | 1.02 | 0.70 | 1.70 | 2.29 | 1.05 |
| | 8 | 2.698 | 4.06 | 4.81 | 2.68 | 2.75 | 2.703 | 3.84 | 3.84 | 3.84 | 3.84 | 3.84 | 3.84 | 5.16 | 7.10 | 2.31 | 1.58 | 3.84 | 5.16 | 2.37 |
| | 9 | 1.501 | 2.26 | 2.68 | 1.49 | 1.53 | 1.504 | 2.14 | 2.14 | 2.14 | 2.14 | 2.14 | 2.14 | 2.87 | 3.95 | 1.28 | 0.88 | 2.14 | 2.87 | 1.32 |
| | 10 | 1.501 | 2.26 | 2.68 | 1.49 | 1.53 | 1.504 | 2.14 | 2.14 | 2.14 | 2.14 | 2.14 | 2.14 | 2.87 | 3.95 | 1.28 | 0.88 | 2.14 | 2.87 | 1.32 |

(Examples: underlined)

[Table 5]

| Condition of the finished bonding surface between the tread portion and the wing portion (expressed in index) | | | Rubber composition for tread | | | | | | | | | | | | | | | | | |
|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 | 18 |
| | | | 0.665 | 0.561 | 1.007 | 0.982 | 0.998 | 0.703 | 0.703 | 0.703 | 0.703 | 0.703 | 0.703 | 0.523 | 0.380 | 1.170 | 1.710 | 0.703 | 0.523 | 1.140 |
| Rubber composition for wing | 1 | 1.501 | 110 | 90 | 110 | 110 | 110 | 108 | 106 | 103 | 100 | 103 | 103 | 85 | 75 | 105 | 115 | 109 | 83 | 104 |
| | 2 | 1.3015 | 105 | 100 | 110 | 108 | 108 | 106 | 104 | 101 | 100 | 103 | 103 | 80 | 70 | 100 | 110 | 102 | 79 | 98 |
| | 3 | 2.109 | 99 | 90 | 110 | 110 | 105 | 98 | 95 | 90 | 85 | 95 | 90 | 85 | 80 | 110 | 110 | 97 | 81 | 108 |
| | 4 | 2.499 | 90 | 80 | 103 | 97 | 99 | 85 | 75 | 95 | 85 | 90 | 88 | 80 | 60 | 115 | 110 | 88 | 79 | 113 |
| | 5 | 1.501 | 115 | 95 | 105 | 115 | 115 | 115 | 115 | 110 | 105 | 115 | 115 | 90 | 80 | 110 | 120 | 114 | 88 | 109 |
| | 6 | 1.501 | 105 | 85 | 105 | 105 | 105 | 105 | 105 | 100 | 100 | 102 | 102 | 80 | 70 | 100 | 110 | 104 | 78 | 99 |
| | 7 | 1.197 | 85 | 70 | 90 | 90 | 90 | 85 | 85 | 85 | 85 | 85 | 85 | 75 | 65 | 95 | 105 | 70 | 60 | 95 |
| | 8 | 2.698 | 90 | 80 | 90 | 90 | 90 | 90 | 90 | 90 | 90 | 90 | 90 | 70 | 65 | 80 | 75 | 85 | 71 | 85 |
| | 9 | 1.501 | 115 | 90 | 115 | 115 | 110 | 110 | 110 | 105 | 100 | 110 | 110 | 90 | 85 | 110 | 110 | 114 | 89 | 110 |
| | 10 | 1.501 | 115 | 90 | 115 | 110 | 110 | 110 | 110 | 105 | 100 | 110 | 110 | 90 | 85 | 110 | 110 | 114 | 88 | 111 |

(Examples: underlined)

The results of the evaluation of the finish index on Table 5 and the abrasion resistance index on Tables 1 and 2 clearly show that if the net sulfur content in a tread and the net sulfur content in a wing are each set within a specific range and the ratio of these contents satisfies a specific relationship, it is then possible to improve the condition of the finished surface while maintaining good abrasion resistance. Good handling stability ($E^*$), fuel economy (tan $\delta$), and durability (EB) were also achieved in the examples.

Although the above description only describes examples of tires for passenger vehicles (TOS structure) in which the present invention is applied to the tread and the wing, the same effects were achieved in tires for trucks and busses and the like (SOT structure) in which the present invention is applied to the tread and the sidewall.

## Claims

1. A pneumatic tire, comprising a tread and a wing or sidewall adjacent to the tread,
wherein the tread is formed from a rubber composition for a tread which has a net sulfur content derived from crosslinking agents of 0.56 to 1.15 parts by mass per 100 parts by mass of a rubber component of the rubber composition for a tread,
the wing or sidewall is formed from a rubber composition for a wing or sidewall which has a net sulfur content derived from crosslinking agents of 1.3 to 2.5 parts by mass per 100 parts by mass of a rubber component of the composition for a wing or sidewall, and
the following relationship is satisfied between the net sulfur content derived from crosslinking agents in the rubber composition for a tread and the net sulfur content derived from crosslinking agents in the rubber composition for a wing or sidewall:

   (the net sulfur content derived from crosslinking agents in the rubber composition for a wing or sidewall)/(the net sulfur content derived from crosslinking agents in the rubber composition for a tread) ≤ 2.5.

2. The pneumatic tire according to claim 1,
wherein the following relationship in terms of initial curing rate t10 is satisfied:

   0.4 ≤ (t10 of the rubber composition for a wing or sidewall) / (t10 of the rubber composition for a tread) ≤ 2.5.

## Patentansprüche

1. Luftreifen umfassend eine Lauffläche und, benachbart zu der Lauffläche, einen Seitenflügel oder eine Seitenwand,
wobei die Lauffläche aus einer Kautschukzusammensetzung für eine Lauffläche geformt ist, welche einen von Vernetzungsmitteln stammenden Nettoschwefelgehalt von 0,56 bis 1,15 Massenteilen bezogen auf 100 Massenteile der Kautschukkomponente der Kautschukzusammensetzung für eine Lauffläche enthält,
wobei der Seitenflügel oder die Seitenwand aus einer Kautschukzusammensetzung für einen Seitenflügel oder eine Seitenwand geformt ist, welcher einen von Vernetzungsmitteln stammenden Nettoschwefelgehalt von 1,3 bis 2,5 Massenteilen bezogen auf 100 Massenteile der Kautschukkomponente der Kautschukzusammensetzung für einen Seitenflügel oder Seitenwand enthält, und
wobei die nachfolgende Beziehung zwischen dem Nettoschwefelgehalt, von den Vernetzungsmitteln in der Kautschukzusammensetzung für eine Lauffläche stammt, und dem Nettoschwefelgehalt, welcher von den Vernetzungsmitteln in der Kautschukzusammensetzung für einen Seitenflügel oder eine Seitenwand stammt, erfüllt ist:

   (Nettoschwefelgehalt stammend aus Vernetzungsmitteln in der Kautschukzusammensetzung für einen Seitenflügel oder eine Seitenwand) / (Nettoschwefelgehalt stammend aus Vernetzungsmitteln in der Kautschukzusammensetzung für eine Lauffläche) ≤ 2,5.

2. Luftreifen nach Anspruch 1,
wobei die nachfolgende Beziehung in Bezug auf die anfängliche Aushärtgeschwindigkeit t10 erfüllt wird:

   0,4 ≤ (t10 der Kautschukzusammensetzung für einen Seitenflügel oder eine Seitenwand) / (t10 der Kautschukzusammensetzung für eine Lauffläche) ≤ 2,5.

## Revendications

**1.** Bandage pneumatique, comprenant une bande de roulement et une aile ou une paroi latérale adjacente à la bande de roulement,
dans lequel la bande de roulement est formée d'une composition au caoutchouc pour bande de roulement qui présente une teneur en soufre nette, dérivée d'agents de réticulation, de 0,56 à 1,15 parties en masse pour 100 parties en masse d'un composant caoutchouc de la composition au caoutchouc pour bande de roulement,
l'aile ou la paroi latérale est formée d'une composition au caoutchouc pour aile ou pour paroi latérale qui présente une teneur en soufre nette, dérivée d'agents de réticulation, de 1,3 à 2,5 parties en masse pour 100 parties en masse d'un composant caoutchouc de la composition pour une L ou une paroi latérale, et
la relation suivante est satisfaite entre la teneur en soufre nette dérivée des agents de réticulation dans la composition au caoutchouc pour une bande de roulement et la teneur en soufre nette dérivée des agents de réticulation dans la composition au caoutchouc pour une aile ou une paroi latérale :

[teneur en soufre nette dérivée des agents de réticulation dans la composition caoutchouc pour une aile ou une paroi latérale]/[teneur en soufre nette dérivée des agents de réticulation dans la composition au caoutchouc pour une bande de roulement] $\leq$ 2,5.

**2.** Bandage pneumatique selon la revendication 1,
dans lequel la relation suivante, en termes de taux de prise initial t10 est satisfaite :

0,4 $\leq$ [t10 de la composition au caoutchouc pour une L ou une paroi latérale]/[t10 de la composition au caoutchouc pour une bande de roulement] $\leq$ 2,5.

FIG.1

(a)

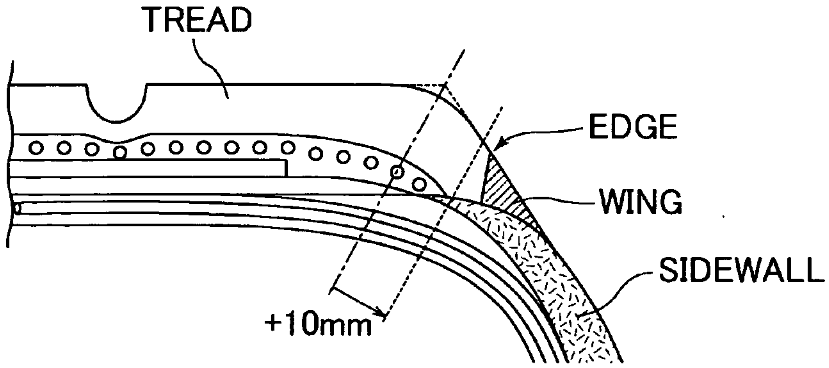
TREAD
EDGE
WING
SIDEWALL
+10mm

(b)

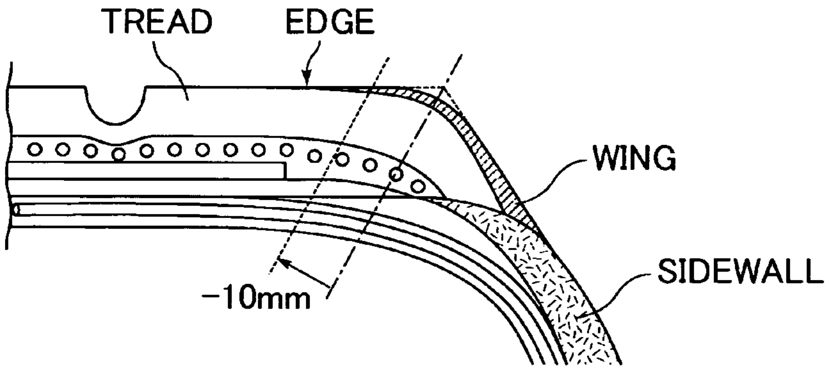
TREAD
EDGE
WING
SIDEWALL
−10mm

(c)

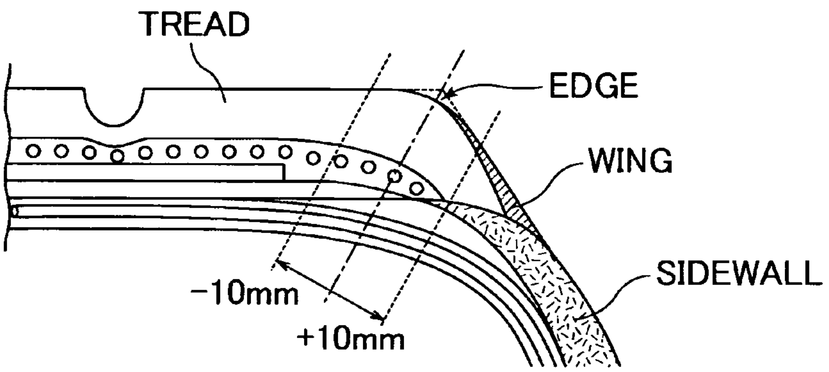
TREAD
EDGE
WING
SIDEWALL
−10mm
+10mm

(d)

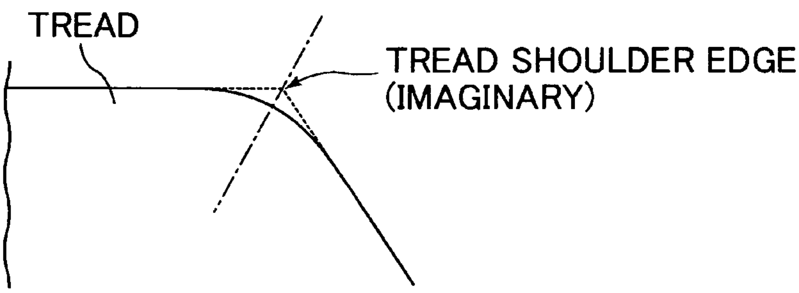
TREAD
TREAD SHOULDER EDGE
(IMAGINARY)

FIG.2

(a)

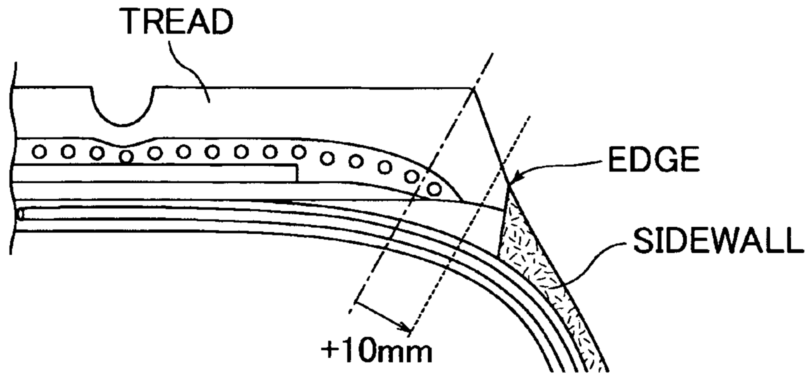
TREAD
EDGE
SIDEWALL
+10mm

(b)

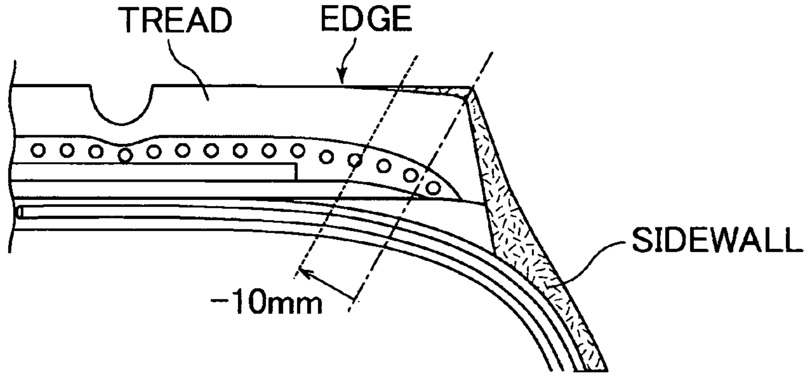
TREAD
EDGE
SIDEWALL
−10mm

(c)

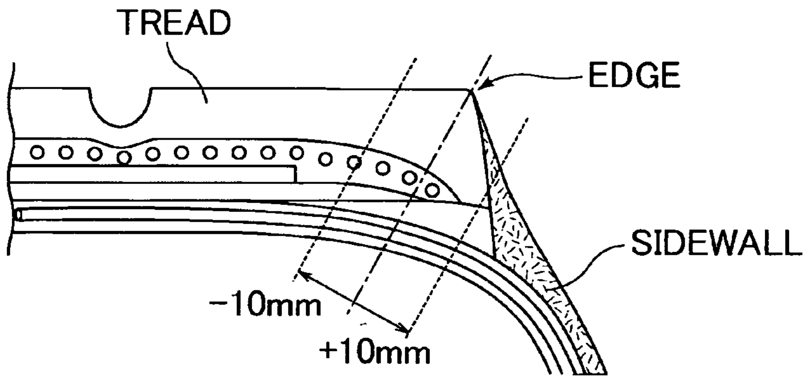
TREAD
EDGE
SIDEWALL
−10mm
+10mm

(d)

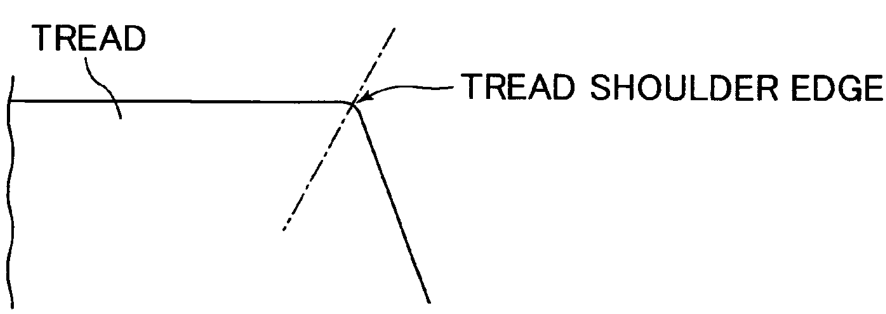
TREAD
TREAD SHOULDER EDGE

FIG.3

(a)

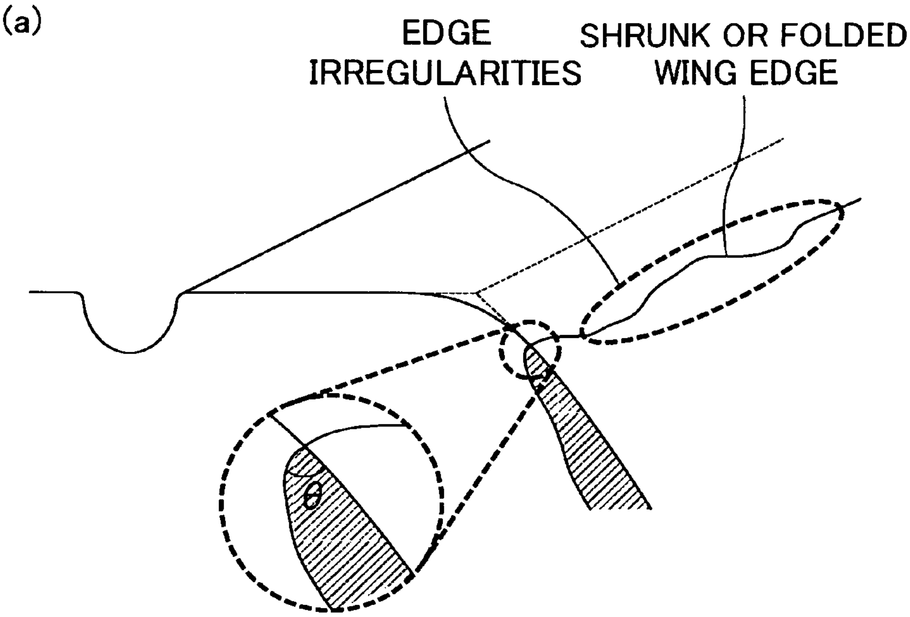


SHRUNK OR FOLDED EDGE (θ>45°)

(b)

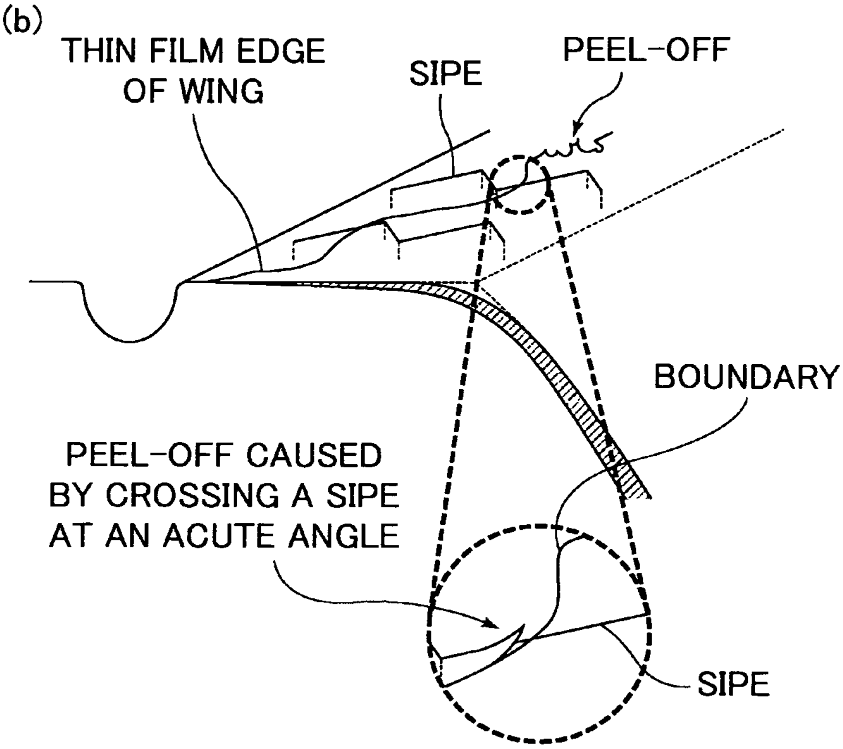


[SIPING: CUTTING SLITS IN THE TREAD PATTERN USING AN IRON BLADE WITH A THICKNESS OF 0.3 TO 1.0 NM]

FIG.4

(a)

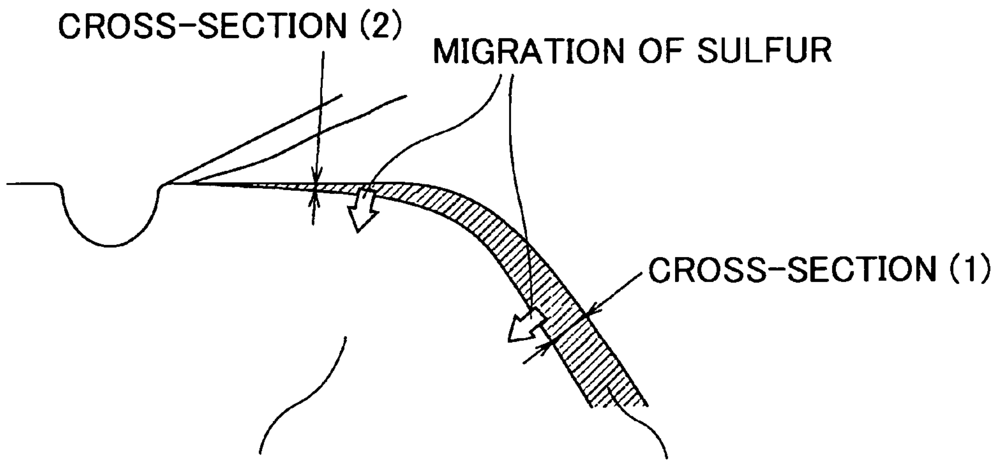


(b)

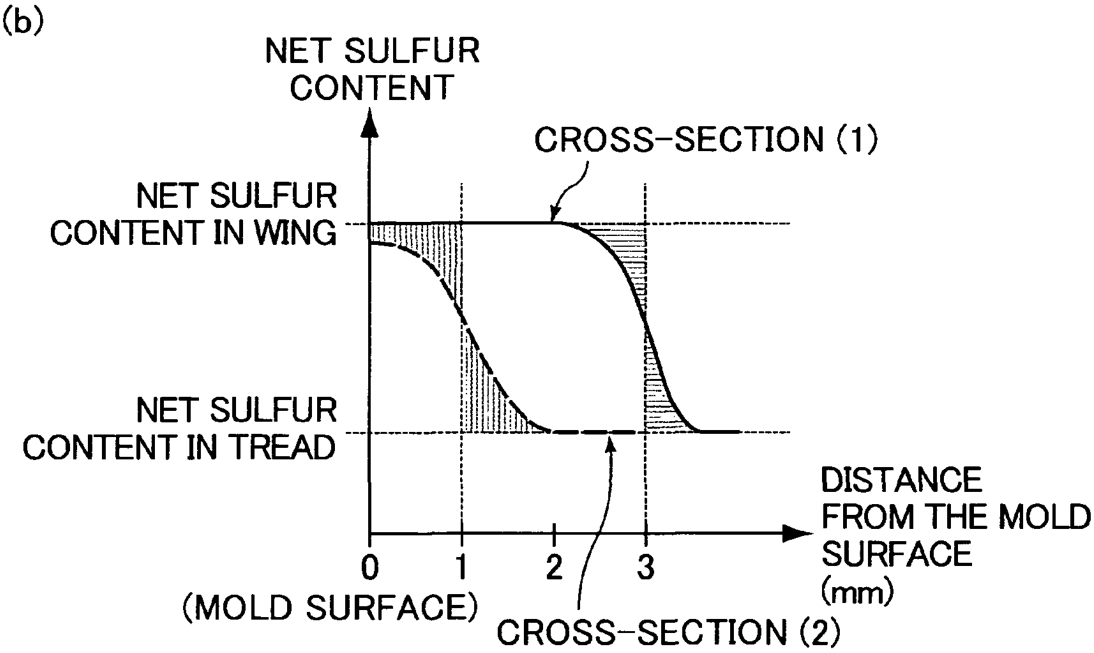


DISTRIBUTION GRAPH SHOWING THE NET SULFUR CONTENT IN CROSS-SECTION (1) AND CROSS-SECTION (2) OF THE WING AFTER VULCANIZATION

[ EACH CURVE RESULTS FROM MIGRATION OF SULFUR (VERTICALLY HATCHED REGIONS AND HORIZONTALLY HATCHED REGIONS) ]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4308289 B
- JP 2008024913 A
- JP 4246245 B
- JP 2007176267 A
- JP 2005280612 A
- JP 2000185529 A
- JP 2010077412 A
- JP 2006274010 A
- JP 2009227858 A
- JP 2006306962 A
- JP 2009275178 A